Europäisches Patentamt

European Patent Office

Office européen des brevets

(19)

(11) Publication number: **0 204 324 B1**

# EUROPEAN PATENT SPECIFICATION

(12)

(45) Date of publication of patent specification: **12.02.92**   (51) Int. Cl.⁵: **B32B 27/08**, B32B 27/20

(21) Application number: **86107592.7**

(22) Date of filing: **04.06.86**

The file contains technical information submitted after the application was filed and not included in this specification

(54) **Resin laminate.**

(30) Priority: **05.06.85 JP 122257/85**

(43) Date of publication of application:
**10.12.86 Bulletin 86/50**

(45) Publication of the grant of the patent:
**12.02.92 Bulletin 92/07**

(84) Designated Contracting States:
**BE CH DE FR GB IT LI NL SE**

(56) References cited:
**EP-A- 0 016 617**
**EP-A- 0 161 035**
**GB-A- 1 284 805**

(73) Proprietor: **IDEMITSU PETROCHEMICAL CO. LTD.**
**1-1, Marunouchi 3-chome Chiyoda-ku Tokyo 100(JP)**

(72) Inventor: **Yamada, Toyokazu**
**1660, Kamiizumi Sodegaura-Cho**
**Kimitsu-Gun Chiba Prefecture(JP)**
Inventor: **Miyama, Masao**
**77, Azu**
**Ichihara City Chiba Prefecture(JP)**
Inventor: **Sugimura, Hideo**
**203-6, Sohri**
**Kisarazu-City Chiba Prefecture(JP)**
Inventor: **Shinohara, Takeshi**
**1660, Kamiizumi Sodegaura-Cho**
**Kimitsu-Gun Chiba Prefecture(JP)**

(74) Representative: **TER MEER - MÜLLER - STEIN-MEISTER & PARTNER**
**Mauerkircherstrasse 45**
**W-8000 München 80(DE)**

## Description

The present invention relates to a resin laminate comprising a gas permeation-resistant resin layer having laminated on each side thereof a polyolefin based resin layer and an adhesive layer between the gas permeation-resistant resin layer and the polyolefin based resin layer for packaging material for packaging various food products, beverages, medicines, etc.

## BACKGROUND OF THE INVENTION

Various materials have heretofore been used as a packaging material for food products, beverages and medicines. For example, paper, synthetic resin sheets or films, laminates of a paper and a synthetic resin sheet or film, etc. are used. Among them, packaging materials composed of a synthetic resin, particularly polyolefin sheets or films, have excellent molding characteristics, high productivity, resistance to water and chemicals, etc. and therefore have been widely used in many fields of industry.

However, polyolefin sheets or films, which are highly resistant to water vapor transmission, have only a poor resistance to permeation of gases, for example, oxygen gas, and as a result even when products or articles such as food products, machines, etc. are packaged with a polyolefin sheet or film, the covered product or article suffers from various problems such as oxidation or deterioration, or generation of rusts by the action of oxygen which permeates the sheet or film.

In order to solve these problems, it has conventionally been proposed to use a laminate material composed of a polyolefin sheet or film and a sheet or film of a resin which is resistant to gas permeation such as nylon, an ethylene-vinyl alcohol copolymer, etc.

However, such laminate materials release a high exothermic energy upon burning, and they tend to give damages to incinerators when they are incinerated. Therefore, it is disadvantageous to employ such laminate materials in the field of industry where they are used in large amounts.

Moreover, containers molded from such laminate materials are insufficient in stiffness, heat resistance, etc. and therefore it is difficult to use such laminate materials as a forming material for producing containers for retort food products.

The EP-A-0 161 035 being a document which is only relevant as far as novelty is concerned according to Art. 54 (3) in combination with Art. 56 EPC, discloses a laminated sheet comprising an inner core of ethylene-alcohol copolymer, two adjacent adhesive layers, two layers of a particular scrap regrind composition containing 60 to 80 % by weight of polypropylene, 15 to 25% by weight of ethylene-vinyl alcohol copolymer, 15 to 25 % by weight of adhesive and 20 to 40 % by weight of inorganic mineral filler, and two layers of polypropylene.

The EP-A-0 016 617 deals with a laminated multi-layer structure comprising a grafted high-density polyethylene resin layer containing 97 to 50 parts by weight of a high-density polyethylene resin layer, 3 to 50 parts by weight of an ethylene/4-methyl-1-pentene copolymer and 0 to 20 parts by weight of a rubbery synthetic polymer or copolymer which is directly attached to a metal layer or a resin layer of polyamide or polyester resin or a saponified copolymer of ethylene and vinyl acetate.

## SUMMARY OF THE INVENTION

An object of the present invention is to provide a resin laminate which has a low permeability to gases such as oxygen gas, etc. and yet has a high resistance to heat and a high stiffness.

Another object of the present invention is to provide a resin laminate which can be used for packaging various products or articles with preventing the covered goods from being oxidized and which can also be used as a material for producing package containers for retort food products.

Still another object of the present invention is to provide a resin laminate having a low calorific value.

As a result of extensive research, it has now been found by the present inventors that a resin laminate comprising a set of polyolefin based resin layers containing a specified amount of an inorganic filler sandwiching therebetween a gas permeation-resistant resin layer meets the above-described objects and thus the present invention has been attained.

The present invention provides a resin laminate comprising a gas permeation-resistant resin layer having laminated on each side thereof a polyolefin based resin layer and an adhesive layer between the gas permeation-resistant resin layer and each polyolefin based resin layer wherein each of said polyolefin based resin layers contains an inorganic filler in an amount of 50 to 80% by weight based on the total weight of the polyolefin based resin layer.

2

BRIEF DESCRIPTION OF THE DRAWINGS

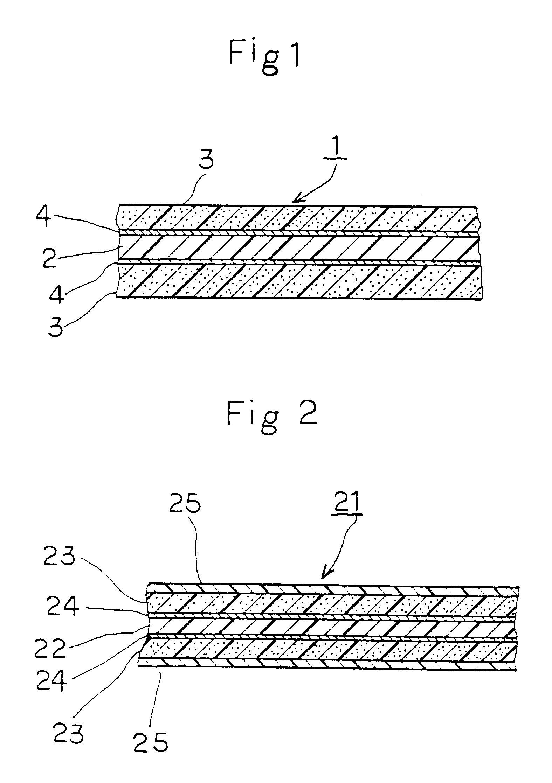

Figs. 1 and 2 are schematic longitudinal sectional views of an embodiment of the present invention.

DETAILED DESCRIPTION OF THE INVENTION

Any resin that has a low permeability to at least oxygen and is capable of being molded into a desired shape can be used as the gas permeation-resistant resin. Examples of the gas permeation-resistant resin which can be used in the present invention include polyvinyl chlorides, polyvinylidene chlorides, halogen-containing polyethylenes such as poly(chlorotrifluoroethylene)s, etc., ethylene-vinyl alcohol copolymers (polymers obtained by saponifying ethylene-vinyl acetate copolymers), polyamides such as nylon-6, nylon-11, nylon-12, nylon-66, nylon-610, etc., polyacrylonitrile, polyesters such as Mylar (du Pont), etc. Of these, polyvinylidene chlorides and ethylene-vinyl alcohol copolymers are preferred and ethylene-vinyl alcohol copolymers having an ethylene content of 20 to 60 mol% are more preferred.

Suitable examples of the inorganic filler which can be used in the present invention include carbonates such as calcium carbonate, magnesium carbonate, dolomite, etc., sulfates such as calcium sulfate, magnesium sulfate, barium sulfate, etc., sulfites such as calcium sulfite, etc. silicates or silicate minerals such as talc, clay, mica, asbestos, glass fiber, glass beads, calcium silicate, montnorillonite, bentonite, etc. metal powder such as iron powder, zinc powder, aluminum powder, etc., metal oxides such as titanium oxide, aluminum oxide, etc., metal hydroxides such as aluminum hydroxide, etc., ceramics such as silicon carbide, silicon nitride, etc. and whiskers thereof, carbon black, graphite, carbon fiber, etc. These inorganic fillers can be used singly or in combination.

Among the above-described inorganic fillers, carbonates, silicates and metal powders are preferred. Particularly, calcium carbonate, barium sulfate, talc, mica, zinc dust, etc. are more preferred, with talc being most preferred.

Further, when carbon black, graphite, carbon fiber, etc. are used as the inorganic filler, the resin laminate exhibits an improved light shielding property, and food products, pharmaceuticals and the like wrapped with this resin laminate can be prevented from deterioration by light, resulting in that prolonged storage can be achieved.

The above-described inorganic filler can be of any shape such as granular, plate crystal , fibery, etc. as far as it has a particle size of not more than 20 micrometers, prefereably not more than 15 micrometers, and more preferably not more than 5 micrometers.

Suitable examples of the polyolefin which can be used as a base polymer of the polyolefin based resin layer include polyethylenes such as high density polyethylenes, medium density polyethylenes, high presure low density polyethylenes, linear low density polyethylenes, etc. polypropylenes such as isotactic polypropylenes, syndiotactic polypropylenes, atactic polypropylenes, etc., polybutenes, poly-4-methylpentene-1, etc.

In the present invention, copolymers of an olefin with an other vinyl monomer, such as ethylene-propylene copolymers, ethylene-vinyl acetate copolymers, ethylene-vinyl chloride copolymers, propylene-vinyl chloride copolymers, etc. can also be used as the base polymer of the polyolefin based resin layer.

Further, modified polyolefins can be used as polyolefins contained as a base polymer in the polyolefin based resin layer. Suitable examples of modified polyolefin include polyolefins chemically modified with an unsaturated carboxylic acid (inclusive of anhydride thereof) or a derivative thereof.

Upon modification of the polyolefin, an elastomer such as a polybutadiene can be added to the reaction mixture. When preparing such chemically modified polyolefins, a polyolefin such as a polypropylene and an unsaturated carboxylic acid or derivative thereof can be reacted in the presence of a free radical initiator.

Among the various polyolefins described above, polyethylenes, polypropylenes, polybutene-1, and polymethylpenten-1 are preferred, and more preferred are polypropylenes, and blends of a polypropylene and a polyethylene.

In the present invention, it is essential that the polyolefin based resin layer contains the above-described inorganic filler in an amount of 50 to 80% by weight based on the total weight of the resin composition. When the content of the inorganic filler is less than 50% by weight, not only heat resistance and mechanical strength are decreased but also the polyolefin based resin layer has a high of combustion which will include damages or disorder of incinerators. On the other hand, with the content of the inorganic filler being more than 80% by weight, the polyolefin based resin layer suffers decrease in the mechanical strength, moldability thermoformability.

If desired, the polyolefin based resin layer can contain various additives in suitable amounts as far as they do not adversely affect the properties of the resulting resin laminate of the present invention. Examples of such additives include elastomers such as EPR (ethylene-propylene rubber), EPDM (ethylene-propylenediene terpolymer), etc., coloring agents such as sparingly soluble azo dyes, red color forming coloring agent, cadmium yellow, cream yellow, titanium white, etc., antioxidants such as triazole based antioxioxidant, salicylic acid based antioxidant, acrylonitrile based antioxidant, ets., plasticizers such as phthaloyl diesters, butanol diesters, phosphoric diesters, etc., heat stabilizers, and the like.

The present invention will be further described with reference to the accompanying drawing.

As shown in Fig. 1, a resin laminate 1 basically comprises a gas permeation-resistant resin layer 2 on each of the opposite surfaces of which is laminated a polyolefin based resin layer 3 containing an inorganic filler in an amount of 50 to 80% by weight based on the total weight of the resin composition. The thickness of the gas permeation-resistant resin layer 2 and that of the polyolefin based resin layer can be varied appropriately depending on the kind of the gas permeation-resistant resin used, utility of the resin laminate 1, ie., whether it is used for packaging food products or for producing containers for retort food products, etc.

The resin laminate 1 can be produced in various manners, for example, by a co-extrusion method such as a T-die method, an inflation method, etc., a lamination method such as an extrusion lamination mehod, a dry lamination method, a wet lamination method, a hot melt lamination method, a solventless lamination method, etc. and the like. By these methods multi-layered films, sheets, blown bottles, etc. can be obtained.

In these molding methods, an adhesive layer 4 can be provided between the gas permeation-resistant resin layer 2 and the polyolefin based resin layer 3 as shown in Fig. 1 in order to increase adhesion or glueability therebetween.

As for the adhesive layer 4, there can be used, for example, the above-described modified polyolefins, ionomer resins, ethylene-vinyl acetate copolymers, etc.

Alternatively, in place of providing the adhesive layer 4, the above-described modified polyolefins, ionomer resins, ethylene-vinyl acetate copolymers, etc. can be blended into the gas permeation-resistant resin layer 2 and/or polyolefin based resin layer 3, thus obtaining similar effects.

In this case, the modified polyolefin, ionomer resin or ethylene-vinyl acetate copolymer can be added to the layer 2 and/or layer 3 can be 0.1 to 30% by weight, preferably 0.5 to 20% by weight, based on the total weight of the resin composition.

As shown in Fig. 2, the resin laminate 21 of the present invention may be provided with a thermoplastic resin layer 25 which contains no inorganic filler on a polyolefin based resin layer 23 which contains an inorganic filler in order to improve surface properties such as smoothness, glossiness, etc., solvent resistance, printability and the like.

Suitable examples of the thermoplastic resin include polyolefins such as polypropylenes, polyethylenes, etc., polyesters, polyamides and the like.

As stated above, provision of a thermoplastic resin layer containing no inorganic filler as a third layer on the outer surface of the resin laminate results in improvement in mechanical strength, surface properties such as glossiness, abrasion resistance, etc., printability, solvent resistance and the like.

The resin laminate of the present invention can be used as a packaging material as it is, or it can be provided thereon with a metal foil, paper, etc. to form a composite resin laminate, which can be used as a packaging material. The resin laminate can be formed into containers by thermoforming.

Further, the resin laminate of the present invention can be molded into hollow containers by a co-extrusion blow molding method, etc.

According to the present invention, the following effects are attained.

(1) The resin laminate not only has minimized gas permeability but also has a high resistance to vapor transmission and a high mechanical strength such as stiffness as well as exhibits exellent molding characteristics since it comprises a gas permeation-resistant resin layer and a polyolefin based resin layer laminated one on another. Therefore, it can be used advantageously as a packaging material which is free from oxidation or deterioration of goods packaged therewith and from generation of rusts.

(2) The resin laminate has polyolefin based resin layer containing an inorganic filler in an amount of 20 to 80% by weight based on the total weight of the resin composition, and as a result, it has a sufficient heat resistance and thereby is rendered to have a low calorific value. Therefore, the resin laminate is suitable as a container or packaging material for retort food products, and after use they can be incinerated without damaging incinerators and thus disposal of waste resin laminates causes no problem.

EXAMPLE 1

A material for a gas permeation resistant layer was prepared by extrusion molding an ethylene-vinyl alcohol copolymer (Eval EP-F101, a registered trade mark for the product by Kuraray Co., Ltd.; ethylene content: 32 mol%, melt index: 1.3g/10min.) using a 30mm$\phi$ extruder. A material for an adhesive layer was prepared by extrusion molding a polypropylene modified with maleic anhydride (Idemitsu Polytac, a registered trade mark for a product by Idemitsu Petro-Chemical Co., Ltd.) using a 30mm$\phi$ extruder. A material for a polyolefin based resin layer was prepared by extrusion molding a polypropylene (Idemitsu Polypro E-100G, a trade name for a product by Idemitsu Petro-Chemical Co., Ltd.; melt index: 0.6g/10min.) containing talc (average particle size: 14$\mu$m) in an amount of 60% by weight based on the total weight of the resin composition using a 65mm$\emptyset$ extruder. The thus-prepared materials were co-extruded using a feed block to form a 3-unit layer, 5-layered resin laminate of 0.8mm thick having a symmetric construction of polyolefin based resin layer/adhesive layer/gas permeation resistant layer/adhesive layer/polyolefin based resin layer (Fig. 1).

The ratio of thickness of gas permeation resistant layer/adhesive layer/polyolefin based resin layer is 4:3:45.

The resin laminate was determined Olsen stiffness, oxygen gas permeability, and calorific value as indicated below.

Olsen Stiffness:

This was determined according to the method described in ASTM-D747.

Oxygen Gas Permeability:

This was determined according to the method described in ASTM-D1434.

Calorific Value:

This was determined according to the method described in JIS-K2279.

The results obtained are shown in Table 1.

EXAMPLE 2

A material for a thermoplastic resin layer containing no inorganic filler was prepared by extrusion molding a polypropylene (Idemitsu Polypro, E-100G, a trade name for a product by Idemitsu Petro-Chemical Co., Ltd.) using a 50mm$\emptyset$ extruder, and this material was co-extruded together with the three materials described in Example 1 using a feed block such that the material for the thermoplastic resin layer was on the outside surface of the resin laminate as prepared in Example 1 to obtain a 4-unit layer, 7-layerd resin laminate having a symmetric construction of thermoplastic layer/polyolefin based resin layer/adhesive layer/gas permeation resistant layer/adhesive layer/polyolefin based resin layer/thermoplastic layer(Fig. 2). The ratio of thickness of gas permeation resistant layer/adhesive layer/polyolefin based resin layer/polyolefin was 2:2:42:5. The resin laminate obtained was determined Olsen stiffness, oxygen gas permeability and calorific value in the same manner as in Example 1.

The results obtained are shown in Table 1.

COMPARATIVE EXAMPLE 1

A single layer sheet of 0.8mm thick was prepared using the same polypropylene as that used in Example 1 for the thermoplastic resin layer, and the Olsen stiffness, oxygen gas permeability and calorific value thereof were determined in the same manner in Example 1.

The results obtained are shown in Table 1.

COMPARATIVE EXAMPLE 2

A single layer sheet of 0.8mm thick was prepared using the same talc-containing polypropylene as that used in Example 1 for the polyolefin based resin layer, and the Olsen stiffness, oxygen gas permeability and calorific value thereof were determined in the same manner in Example 1.

The results obtained are shown in Table 1.

COMPARATIVE EXAMPLE 3

The procedures in Example 2 were repeated except that that the ethydlene-vinyl alcohol copolymer layer and the modified polypropylene layer were omitted to obtain a 2-unit layer, 3-layered laminate sheet of 0.8 mm thick having a symmetric construction of thermoplastic resin laye/polyolefin based resin layer/thermoplastic resin layer with a thickness ratio of 5 : 90 : 5, and the Olsen stiffness, oxygen gas permeability and calorific value thereof were determined in the same manner as in Example 1.

The results obtained are shown in Table 1.

EXAMPLE 3

A material for a gas permeation rsistant layer was prepared by extrusion molding an ethylene-vinyl alcohol copolymer (Soarnol ET, a registered trade mark for a product by Nippon Gosei Kagaku K.K.; ethylene content: 38 mol %, melt index: 1.4 g/10 min.) using a 30 mm $\emptyset$ extruder. A material for an adhesive layer was prepared by extrusion molding the same maleic anhydride-modified polypropylene as in Examle 1 30 mm$\emptyset$ extruder. A material for a polyolefin based resin layer was prepared by extrusion molding a resin composition consisting of talc (average particle size: 14 $\mu$m) in an amount of 50% by weight based on the total weight of the resin composition and a polyolefin which was a mixed resin composed of 95% by weight of the same polyolefin resin as used in Example 1 and 5 % by weight of an ethylene-propylene elastomer (density: 0.86 g/cm$^3$, melt index (230 C): 3.6 g/10 min., propylene content: 22% by weight, Mooney viscosity(ML$_{1+4}$ 100 $^\circ$C): 20) using a 65mm$\emptyset$ extruder. Further, a material for an outermost polyolefin layer containing no inorganic filler was prepared by extrusion molding a polypropylene (Idemitsu Polypro F200 S, a trade name for product by Idemitsu Petro-Chemical Co., ltd.; melt index: 2 g/10 min.) using a 50 mm$\emptyset$ extruder. These materials were co-extruded using a feed block to form a 4-unit layer, 7-layered resin laminate of 0.8 mm thick. The layer construction of the laminate was polypropylene layer (A)/talc-containing resin layer (B)/modified polypropylene layer (C)/ethylene-vinyl alcohol copolymer layer (D)/(C')/(B')/(A'), and the thickness ratio of the layers was 5 : 41.5 : 2 : 3 : 2 : 41.5 : 5.

The resin laminate was determined various properties and the results obtained are shown in Table 2.

EXAMPLE 4

The procedures in Example 3 were repeated except that the resin composition for the outermost layers (A, A') was replaced by a mixed resin composed of 40% by weight of the same polypropylene as used in Example 1 and 60 % by weight of a high density polyethylene (Idemitsu Polyethy 520 B, a trade name for a product by Idemitsu Petro-Chemical Co., Ltd.; density: 0.964 g/cm$^3$, melt index: 0.4 g/10 min.). The properties of the resin laminate were determined and the results obtained ar shown in Table 2.

EXAMPLE 5

The procedures in Examle 4 were repeated except that the mixed resin for the outermost layers (A, A') was used as a resin composition for the talc-containing resin layers (B,B' ) to form a resin laminate. The properties of the resin laminate were determined and the results obtained are shown in Table 2.

COMPARATIVE EXAMPLE 4

The procedures in Example 5 were repeated except that the modified polypropylene and ethylene-vinyl alcohol copolymer were not used to form a 2-unit layer, 3-layered resin laminate of 0.8 mm thick having a construction of (A)/(B)/(A'). The thickness ratio of the layers was 5 : 90 : 5.

The properties determined are shown in Table 2.

EXAMPLE 6

The procedures in Example 3 were repeated except that talc having an average particle size of 2 $\mu$m was used. Microscopic observation of the cross section of the resin laminate obtained revealed that the resin laminate of this example has a very smooth interface between the talc-containing resin layer and the modified polypropylene layer a compared with the resin laminate obtained in Example 3, and no adverse influence on the ethylene-vinyl alcohol copolymer layer was observed.

EXAMPLE 7

The procedures in Example 3 were repeated except that the talc was replaced by calcium carbonate having an average particle size of 4 $\mu$m to obtain a resin laminate.

EXAMPLE 8

The resin laminate sheet as obtained in Example 5 was pressure thermoformed into a cup (diameter of the opening: 75 mm, diameter of the bottom: 50 mm, height: 80 mm). Although it was deep drawn, the container had a good wall thickness distribution and a paper-like feeling. The cup showed an oxygen gas permeability of 0.03 $cm^3$/package.24 hours and a water vapor transmission of 0.02 $cm^3$/package.24 hours.

Although the present invention has been described with preferred embodiments, it is to be understood that variations and modifications may be employed as will be apparent to those skilled in the art.

**Table 1**

| | Olsen Stiffness | | Oxygen Gas Permeability | Calorific Value | |
|---|---|---|---|---|---|
| | (Pa) $\cdot 10^9$ | [kg/cm$^2$] | (ml/m$^2$ . 24 hr s/atm 23°C, 0% RH) | (J/g) | [cal/g] |
| Ex. 1 | 1.23 | [12500] | 0.5 | 20515 | [4900] |
| Ex. 2 | 1.18 | [12000] | 1.0 | 22190 | [5300] |
| C. Ex. 1 | 0.93 | [9500] | 350 | 46055 | [11000] |
| C. Ex. 2 | 1.32 | [13500] | 400 | 18003 | [4300] |
| C. Ex. 3 | 1.23 | [12500] | 380 | 22190 | [5300] |

**Table 2**

Tensile Properties

| | Modulas of Elasticity MD/TD | | Yield Strength MD/TD | | Tensile Strength MD/TD | | Elongation MD/TD |
|---|---|---|---|---|---|---|---|
| | (Pa) $\cdot 10^7$ | [kg/cm$^2$] | (Pa) $\cdot 10^7$ | [kg/cm$^2$] | (Pa) $\cdot 10^7$ | [kg/cm$^2$] | (%) |
| Ex. 3 | 2.09/1.79 | 213/182 | 2.65/2.35 | 270/240 | 2.45/2.26 | 250/230 | 11/9.8 |
| Ex. 4 | 1.99/1.72 | 203/175 | 2.65/2.26 | 270/230 | 2.55/2.16 | 260/220 | 66/6.3 |
| Ex. 5 | 2.33/2.20 | 238/224 | 2.75/2.55 | 280/260 | 2.55/2.45 | 260/250 | 4.6/3.3 |
| C. Ex. 4 | 2.37/2.07 | 242/211 | 2.55/2.35 | 260/240 | 2.45/2.35 | 250/240 | 2.4/2.1 |

Table 2 (Continued)

| | Olsen Stiffness (Pa) *10⁷ | Olsen Stiffness [kg/cm²] | duPont Impact Strength *1 -20/23°C (kg . cm) | Tensile Impact Strength *2 MD/TD (kg-cm/cm²) | Oxygen permeability (ml/m², 24h) 23 C, 0%RH | Water *3 transmission (g/m², 24h) 40°C, 90%RH | Vicat *4 Softening point (°C) |
|---|---|---|---|---|---|---|---|
| Ex. 3 | 1.53/1.34 | 156/137 | 2.6/18.5 | 70/66 | 0.7 | 0.7 | 144 |
| Ex. 4 | 1.56/1.38 | 159/141 | 3.2/20.0 | 78/65 | 2.6 | 0.4 | 132.5 |
| Ex. 5 | 1.57/1.68 | 160/171 | 1.5/11.7 | 63/60 | 1.2 | 0.2 | 130 |
| C. Ex. 4 | 1.49/1.48 | 152/151 | 1.1/3.0 | 45/44 | 27 | 0.4 | 129.5 |

*1: Determined using a duPont Impact Tester manufactured by Toyo Tester Co., Ltd.

*2: Determined according to the method described in ASTM-D1822

*3: Determined according to the method described in ASTM-F372

*4: Determined according to the method described in ASTM-D1525

## Claims

1. A resin laminate comprising a gas permeation-resistant resin layer having laminated on each side thereof a polyolefin based resin layer and an adhesive layer between the gas permeation-resistant resin layer and each polyolefin based resin layer wherein each of said polyolefin based resin layers contains an inorganic filler in an amount of 50 to 80% by weight based on the total weight of the polyolefin

8

based resin layer.

2. A resin laminate as in claim 1, wherein said gas permeation-resistant resin layer is an oxygen gas permeation resistant resin layer.

3. A resin laminate as in claim 1, wherein said gas permeation-resistant resin is at least one member selected from the group consisting of a polyvinyl chloride, a polyvinylidene chloride, a halogen-containing polyolefin, polyacrylonitrile and ethylene-vinyl alcohol copolymer, a polyamide and a polyester.

4. A resin laminate as in claim 1, wherein said gas permeation-resistant resin is an ethylene-vinyl alcohol copolymer.

5. A resin laminate as in claim 4, wherein said ethylene-vinyl alcohol copolymer is one having an ethylene monomer content of 20 to 60 mol %.

6. A resin laminate as in claim 4, wherein said ethylene-vinyl alcohol copolymer is a polymer obtainable by saponifying an ethylene-vinyl acetate copolymer.

7. A resin laminate as in claim 6, wherein said ethylene-vinyl alcohol copolymer is one having an ethylene monomer content of 20 to 60 mol %.

8. A resin laminate as in claim 1, wherein said polyolefin based resin is at least one member selected from the group consisting of a polyethylene, a polypropylene, a polybutene and a poly-4-methylpentene-1.

9. A resin laminate as in claim 1, wherein said polyolefin based resin is a blend of a polypropylene and a polyethylene.

10. A resin laminate as in claim 1, wherein said polyolefin based resin is a polypropylene.

11. A resin laminate as in claim 1, wherein said gas permeation-resistant resin is an ethylene-vinyl alcohol copolymer and said polyolefin based resin is a polypropylene.

12. A resin laminate as in claim 1, wherein said inorganic filler is at least one member selected from the group consisting of a silicate, a sulfate, a sulfite, a silicate, a silicate mineral, a metal powder, a metal oxide, a metal hydroxide, a ceramic, a ceramic whisker, a carbon graphite, a carbon black, and a carbon fiber.

13. A resin laminate as in claim 1, wherein said inorganic filler is a carbonate, a sulfate, a silicate or a metal powder.

14. A resin laminate as in claim 1, wherein said inorganic filler is at least one member selected from the group consisting of calcium carbonate, barium sulfate, talc, mica and zinc powder.

15. A resin laminate as in claim 1, wherein said inorganic filler is talc.

16. A resin laminate as in claim 1, wherein said gas permeation-resistant resin is an ethylene-vinyl alcohol copolymer, said polyolefin based resin is a polypropylene and said inorganic filler is talc.

17. A resin laminate as in claim 1, wherein said inorganic filler has a particle size of not more than 20 $\mu$m.

18. A resin laminate as in claim 1, wherein said resin laminate is a molded article produced by co-extrusion molding.

19. A resin laminate as in claim 1, wherein said resin laminate is a container produced by blow molding.

20. The resin laminate as in claim 1, wherein said resin laminate further comprises a thermoplastic resin

9

layer containing no inorganic filler laminated on the outer surface of said polyolefin based resin layer containing the inorganic filler in an amount of 50 to 80% by weight based on the total weight of the polyolefin based resin layer.

**Revendications**

1. Stratifié de résine comprenant une couche de résine résistant à la pénétration des gaz, sur chaque côté de laquelle est appliquée une couche de résine à base de polyoléfine et une couche adhésive entre la couche de résine résistant à la pénétration des gaz et chaque couche de résine à base de polyoléfine, dans lequel chacune desdites couches de résine à base de polyoléfine contient une charge minérale en une quantité de 50 à 80 % en poids, par rapport au poids total de la couche de résine à base de polyoléfine.

2. Stratifié de résine selon la revendication 1, dans lequel ladite couche de résine résistant à la pénétration des gaz est une couche de résine résistant à la pénétration de l'oxygène gazeux.

3. Stratifié de résine selon la revendication 1, dans lequel ladite résine résistant à la pénétration des gaz est au moins une résine choisie parmi un poly(chlorure de vinyle), un poly(chlorure de vinylidène), une polyoléfine halogénée, un polyacrylonitrile et un copolymère éthylène/alcool vinylique, un polyamide et un polyester.

4. Stratifié de résine selon la revendication 1, dans lequel ladite résine résistant à la pénétration des gaz est un copolymère éthylène/alcool vinylique.

5. Stratifié de résine selon la revendication 4, dans lequel ledit copolymère éthylène/alcool vinylique est un copolymère ayant une teneur en monomère éthylène allant de 20 à 60 % en moles.

6. Stratifié de résine selon la revendication 4, dans lequel ledit copolymère éthylène/alcool vinylique est un polymère préparable par saponification d'un copolymère éthylène/acétate de vinyle.

7. Stratifié de résine selon la revendication 6, dans lequel ledit copolymère éthylène/alcool vinylique est un copolymère ayant une teneur en monomère éthylène allant de 20 à 60 % en moles.

8. Stratifié de résine selon la revendication 1, dans lequel ladite résine à base de polyoléfine est au moins une résine choisie parmi un polyéthylène, un polypropylène, un polybutène et un poly-4-méthylpentène-1.

9. Stratifié de résine selon la revendication 1, dans lequel ladite résine à base de polyoléfine est un mélange d'un polypropylène et d'un polyéthylène.

10. Stratifié de résine selon la revendication 1, dans lequel ladite résine à base de polyoléfine est un polypropylène.

11. Stratifié de résine selon la revendication 1, dans lequel ladite résine résistant à la pénétration des gaz est un copolymère éthylène/alcool vinylique et ladite résine à base de polyoléfine est un polypropylène.

12. Stratifié de résine selon la revendication 1, dans lequel ladite charge minérale est au moins une charge choisie parmi un carbonate, un sulfate, un sulfite, un silicate, un minéral à base de silicate, une poudre métallique, un oxyde métallique, un hydroxyde métallique, une céramique, une trichite céramique, un graphite, un noir de carbone et une fibre de carbone.

13. Stratifié de résine selon la revendication 1, dans lequel ladite charge minérale est un carbonate, un sulfate, un silicate ou une poudre métallique.

14. Stratifié de résine selon la revendication 1, dans lequel ladite charge minérale est au moins une charge choisie parmi le carbonate de calcium, le sulfate de baryum, le talc, le mica et la poudre de zinc.

**15.** Stratifié de résine selon la revendication 1, dans lequel ladite charge minérale est le talc.

**16.** Stratifié de résine selon la revendication 1, dans lequel ladite résine résistant à la pénétration des gaz est un copolymère éthylène/alcool vinylique, ladite résine à base de polyoléfine est un polypropylène et ladite charge minérale est le talc.

**17.** Stratifié de résine selon la revendication 1, dans lequel ladite charge minérale a une taille de particules n'excédant pas 20 $\mu$m.

**18.** Stratifié de résine selon la revendication 1, dans lequel ledit stratifié de résine est un article moulé produit par moulage par co-extrusion.

**19.** Stratifié de résine selon la revendication 1, dans lequel ledit stratifié de résine est un contenant produit par moulage par soufflage.

**20.** Stratifié de résine selon la revendication 1, dans lequel ledit stratifié de résine comprend en outre une couche de résine thermoplastique ne contenant pas de charge minérale, appliquée sur la surface externe de ladite couche de résine à base de polyoléfine contenant la charge minérale en une quantité allant de 50 à 80 % en poids, par rapport au poids total de la couche de résine à base de polyoléfine.

**Patentansprüche**

**1.** Harzlaminat, umfassend eine gaspermeationsbeständige Harzschicht, auf welcher auf jeder Seite eine Harzschicht auf Polyolefinbasis laminiert ist, und eine Klebstoffschicht zwischen der gaspermeationsbeständigen Harzschicht und jeder Harzschicht auf Polyolefinbasis, wobei jede der Harzschichten auf Polyolefinbasis einen anorganischen Füllstoff in einer Menge von 50 bis 80 Gew.-% enthält, bezogen auf das Gesamtgewicht der Harzschicht auf Polyolefinbasis.

**2.** Harzlaminat nach Anspruch 1, wobei die gaspermeationsbeständige Harzschicht eine sauerstoffgaspermeationsbeständige Harzschicht ist.

**3.** Harzlaminat nach Anspruch 1, wobei das gaspermeationsbeständige Harz mindestens ein Vertreter ist, der aus der aus einem Polyvinylchlorid, einem Polyvinylidenchlorid, einem Halogen enthaltenden Polyolefin, Polyacrylnitril und Ethylen-Vinylalkohol-Copolymer, einem Polyamid und einem Polyester bestehenden Gruppe gewählt ist.

**4.** Harzlaminat nach Anspruch 1, wobei das gaspermeationsbeständige Harz ein Ethylen-Vinylalkohol-Copolymer ist.

**5.** Harzlaminat nach Anspruch 4, wobei das Ethylen-Vinylalkohol-Copolymer ein solches mit einem Ethylenmonomergehalt von 20 bis 60 Mol-% ist.

**6.** Harzlaminat nach Anspruch 4, wobei das Ethylen-Vinylalkohol-Copolymer ein Polymer ist, erhältlich durch Verseifen eines Ethylen-Vinylacetat-Copolymeren.

**7.** Harzlaminat nach Anspruch 6, wobei das Ethylen-Vinylalkohol-Copolymer ein solches mit einem Ethylenmonomergehalt von 20 bis 60 Mol-% ist.

**8.** Harzlaminat nach Anspruch 1, wobei das Harz auf Polyolefinbasis mindestens ein Vertreter ist, der aus der aus einem Polyethylen, einem Polypropylen, einem Polybuten und einem Poly-4-methylpenten-1 bestehenden Gruppe gewählt ist.

**9.** Harzlaminat nach Anspruch 1, wobei das Harz auf Polyolefinbasis eine Mischung aus einem Polypropylen und einem Polyethylen ist.

**10.** Harzlaminat nach Anspruch 1, wobei das Harz auf Polyolefinbasis ein Polypropylen ist.

**11.** Harzlaminat nach Anspruch 1, wobei das gaspermeationsbeständige Harz ein Ethylen-Vinylalkohol-Copolymer und das Harz auf Polyolefinbasis ein Polypropylen ist.

12. Harzlaminat nach Anspruch 1, wobei der anorganische Füllstoffmindestens ein Vertreter ist, der aus der aus einem Silicat, einem Sulfat, einem Sulfit, einem Silicat, einem Silicatmineral, einem Metallpulver, einem Metalloxid, einem Metallhydroxid, einer Keramik, einem Keramik-Whisker, einem Kohlenstoffgraphit, einem Ruß und einer Kohlenstoffaser bestehenden Gruppe gewählt ist.

13. Harzlaminat nach Anspruch 1, wobei der anorganische Füllstoff ein Carbonat, ein Sulfat, ein Silicat oder ein Metallpulver ist.

14. Harzlaminat nach Anspruch 1, wobei der anorganische Füllstoffmindestens ein Vertreter ist, der aus der aus Calciumcarbonat, Bariumsufat, Talk, Glimmer und Zinkpulver bestehenden Gruppe gewählt ist.

15. Harzlaminat nach Anspruch 1, wobei der anorganische Füllstoff Talk ist.

16. Harzlaminat nach Anspruch 1, wobei das gaspermeationsbeständige Harz ein Ethylen-Vinylalkohol-Copolymer, das Harz auf Polyolefinbasis ein Polypropylen und der anorganische Füllstoff Talk ist.

17. Harzlaminat nach Anspruch 1, wobei der anorganische Füllstoff eine Teilchengröße von nicht mehr als 20 μm besitzt.

18. Harzlaminat nach Anspruch 1, wobei das Harzlaminat ein durch Koextrusionsformen hergestellter Formkörper ist.

19. Harzlaminat nach Anspruch 1, wobei das Harzlaminat ein durch Blasformung hergestellter Behälter ist.

20. Harzlaminat nach Anspruch 1, wobei das Harzlaminat weiterhin eine thermoplastische Harzschicht umfaßt, die keinen anorganischen Füllstoff enthält und auf der Außenfläche der Harzschicht auf Polyolefinbasis, die den anorganischen Füllstoff in einer Menge von 50 bis 80 Gew.-%, bezogen auf das Gesamtgewicht der Harzschicht auf Polyolefinbasis enthält, laminiert ist.

# Fig 1

# Fig 2